# FASCICULE DE BREVET EUROPEEN

(11) **EP 0 941 623 B1**
(45) Date de publication et mention de la délivrance du brevet: **04.01.2006**
(21) Numéro de dépôt: 97947142.2
(22) Date de dépôt: 27.11.1997
(51) Int. Cl.: H04Q 7/30

(54) **DISPOSITIF DE TRANSCODAGE POURVU D'UNE DERIVATION**
VORRICHTUNG ZUR TRANSKODIERUNG UNTER BENUTZUNG EINES BYPASS
TRANSCODING DEVICE PROVIDED WITH A DERIVATION

(30) Priorité: 28.11.1996 FR 9614781
(43) Date de publication de la demande: 15.09.1999
(73) Titulaire: NORTEL NETWORKS SA, 78280 Guyancourt Cedex 9 (FR)
(72) Inventeur: LE STRAT, Evelyne, F-75015 Paris (FR); FAUCONNIER, Denis, F-78470 Saint-Remy-Les-Chevreuse (FR); NAVARRO, William, F-78140 Velizy-Villacoublay (FR)
(74) Mandataire: Loisel, Bertrand
(86) Numéro de dépôt international: PCT/FR1997/002133
(87) Numéro de publication internationale: WO 1998/024255

(56) Documents cités:
- WO-A-93/09607
- WO-A-96/19907
- US-A- 5 295 178
- US-A- 5 533 121

## Description

La présente invention qui prend place dans le domaine des télécommunications concerne les dispositifs de transcodage. Ces dispositifs ont pour fonction de transformer un signal reçu ayant fait l'objet d'un premier codage dans un premier réseau en un signal émis satisfaisant à un second codage employé dans un second réseau, étant entendu que le signal en cause est acheminé du premier vers le second réseau.

A titre d'exemple, le premier réseau est un réseau mobile de radiocommunications GSM et le second réseau est le réseau téléphonique commuté public ou RTCP. Selon la pratique courante, un signal de parole analogique est numérisé en échantillons de 13 bits au rythme de 8 kHz, soit un débit de 104 kilobits par seconde (kbps). Le GSM prévoit actuellement trois types de codage, le codage plein débit, le codage plein débit amélioré et le codage demi-débit qui, à partir du signal à 104 kbps, produisent un signal respectivement à 13 kbps, à 12,2 kbps et à 5,6 kbps. Le RTCP code le signal à 104 kbps en un signal dit "MIC" à 64 kbps selon la loi A ou la loi µ en fonction des pays. Ainsi, une communication émise par un abonné du GSM à destination d'un abonné du RTCP nécessite un transcodage pour transformer un signal de parole codé GSM en un signal codé MIC dans un lien montant et pour effectuer l'opération inverse dans un lien descendant où, par convention, le lien montant a son origine chez l'abonné qui émet l'appel tandis que le lien descendant relie l'abonné appelé à l'abonné appelant dans l'autre sens.

Il arrive par ailleurs qu'un abonné GSM émette une communication vers un autre abonné GSM, cette communication transitant par le RTCP. En admettant que les deux abonnés utilisent le même codage GSM, il apparaît que les signaux GSM subissent deux transcodages successifs, l'un GSM vers MIC et l'autre MIC vers GSM. Ces deux transcodages sont inutiles car leur action conjuguée a pour but de restituer un signal identique au signal de départ. De plus, ce double transcodage dégrade sensiblement le signal de parole.

La demande internationale WO-A-96-19907 propose à ce sujet un système pour éviter ces deux opérations de transcodage lorsque cela est possible. Selon ce système, un dispositif de transcodage comprend un premier transcodeur qui reçoit un signal originaire du réseau mobile et le transcode pour produire un signal émis. Ce dispositif comprend de plus un générateur pour produire un message numérique de signalisation indiquant que le signal émis provient d'un abonné mobile et que, par conséquent, le signal reçu par ce dispositif a été soumis à un codage propre au réseau mobile. Le message de signalisation est introduit dans le signal émis par vol de bits de ce signal, c'est-à-dire que certains des bits du signal émis sont remplacés par des bits du message de signalisation. Le signal émis, par hypothèse, emprunte le RTCP. Si ce signal est destiné à un autre abonné mobile, il va être dirigé vers un deuxième dispositif de transcodage. Il est donc prévu dans ce deuxième dispositif un détecteur qui a pour fonction de rechercher le message de signalisation provenant du premier dispositif. On comprend bien que, dans ce cas, les deux dispositifs sont identiques et possèdent donc chacun un générateur et un détecteur. Par conséquent, lorsque le deuxième dispositif a détecté que le premier dispositif lui achemine un signal provenant du réseau mobile, il utilise son propre générateur pour préciser au premier dispositif qu'il a bien reçu son message de signalisation et qu'il est également raccordé à un abonné du réseau mobile. Il est dès lors possible de supprimer les opérations de transcodage dans les transcodeurs de chaque dispositif.

Par ailleurs, il faut noter que les abonnés du RTCP accèdent au réseau par une boucle locale analogique. Un organe de raccordement relie cette boucle locale comprenant deux fils au réseau proprement dit par une connexion quatre fils au moyen d'un circuit hybride. Or, il arrive fréquemment que l'adaptation en impédance de cet organe de raccordement soit de mauvaise qualité. Ce phénomène est à l'origine d'un écho qualifié d'écho électrique. Cet écho n'est pas perceptible lorsque les temps de transmission sont courts, ce qui est le cas dans le RTCP. Par contre, dans les réseaux mobiles, le GSM par exemple, la transmission aller-retour subit un retard de l'ordre de 200 millisecondes et l'écho électrique devient particulièrement gênant. Des annuleurs d'écho, par annuleurs d'écho on entend aussi bien les annuleurs d'écho proprement dits que les suppresseurs d'écho, sont donc disposés dans le réseau mobile sur les liens en provenance du RTCP. Les annuleurs d'écho ne devraient être utilisés que dans le cas de communications entre un abonné mobile et un abonné RTCP. Cependant, le centre de contrôle du réseau mobile ne sait pas toujours distinguer si l'abonné concerné est un abonné mobile ou un abonné RTCP. Il s'ensuit que les annuleurs d'écho sont souvent utilisés dans les communications entre abonnés mobiles.

Les annuleurs d'écho sont des organes de traitement numérique du signal si bien que, par essence, ils modifient le signal numérique qu'ils reçoivent en entrée. Cette considération s'applique naturellement au message de signalisation que reçoit un dispositif de transcodage en provenance du RTCP. Il s'ensuit que si l'intégrité de ce message est affectée, le dispositif qui ne pourra identifier le message reçu ne sera pas capable de discerner si la communication en cause concerne deux abonnés mobiles. La procédure de suppression du double transcodage ne pourra donc pas être mise en oeuvre.

On remarquera que l'altération du message de signalisation pourrait être due à un organe de traitement différent d'un annuleur d'écho. En effet, ces organes sont prévus pour traiter des signaux audio et ne sont donc pas appropriés à la transmission de signalisation numérique. On citera le cas des filtres à titre d'exemple.

La présente invention a ainsi pour objet un dispositif de transcodage qui prend en compte les contraintes ci-dessus imposées tant par le réseau mobile que par le RTCP.

Selon l'invention, le dispositif de transcodage prévu pour transcoder dans un lien montant un signal reçu en un signal émis comprend un organe d'émission de signalisation pour produire un message de signalisation et l'introduire dans le signal émis par vol de bits de ce signal, et cet organe d'émission de signalisation comprend de plus un générateur de tonalité pour ajouter un signal de tonalité au signal émis avant l'introduction du message de signalisation dans ce signal émis.

Le signal de tonalité a pour caractéristique fondamentale une fréquence et non pas une valeur numérique comme dans le cas du message de signalisation. Ce signal de tonalité va donc traverser le ou les différents organes de traitement sans altération de sa caractéristique fondamentale, même s'il subit une atténuation ou éventuellement une amplification. Par ailleurs, l'introduction dans le signal émis du message de signalisation après l'ajout du signal de tonalité est pratiquement sans conséquence. Le message de signalisation s'assimile à un bruit blanc de très faible amplitude.

De plus, le dispositif est également prévu pour transcoder dans un lien descendant un signal reçu en un signal émis et il comprend un détecteur pour rechercher un signal de tonalité et un message de signalisation dans le signal reçu par ce lien descendant.

La double signalisation au moyen du signal de tonalité et du message de signalisation permet d'obtenir des avantages à la détection qui sont détaillés plus loin dans la description.

Naturellement, le dispositif comprend des moyens pour ne pas transcoder les signaux reçus par les liens montant et descendant lorsque le message de signalisation détecté dans le signal reçu par le lien descendant l'indique.

Selon une caractéristique avantageuse du dispositif, celui-ci comprend des moyens pour produire un signal de désactivation à destination d'un organe de traitement placé dans les liens montant ou descendant et dégradant la transmission lorsque le signal de tonalité détecté dans le signal reçu par le lien descendant l'indique.

En particulier, cet organe de traitement consiste en un annuleur d'écho.

Le dispositif de transcodage est préférentiellement adapté, lorsque les signaux émis et reçus correspondent à un signal de parole cantonné dans une bande passante prédéterminée, de sorte que le signal de tonalité soit situé en dehors de cette bande passante.

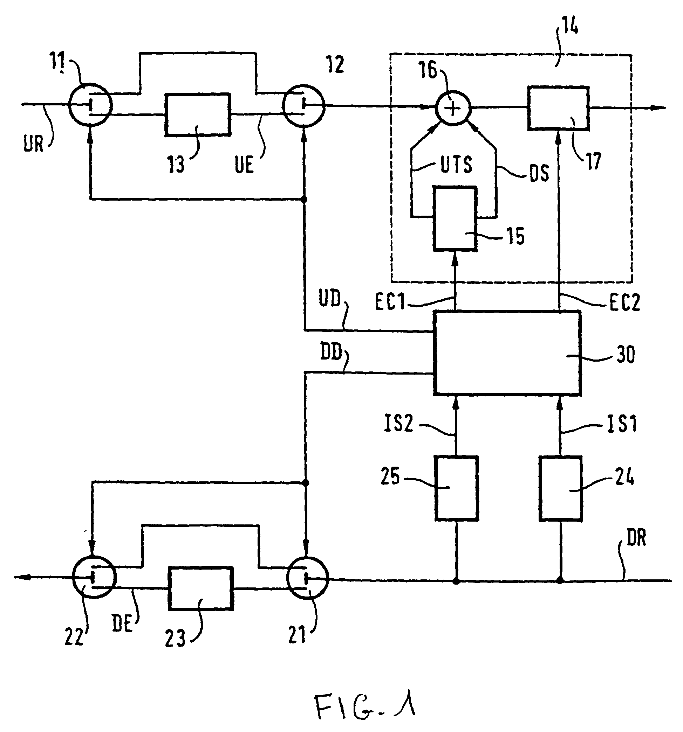

La présente invention sera maintenant explicitée avec plus de détails dans le cadre de la description qui suit d'un exemple de réalisation proposé à titre illustratif en référence à la figure unique annexée qui représente un schéma synoptique d'un dispositif de transcodage.

On présente ici un cas d'application de l'invention impliquant le réseau GSM et le RTCP car ces deux réseaux sont maintenant largement utilisés. L'homme du métier ne rencontrera pas de difficultés particulières pour appliquer cette invention dans une configuration différente.

Dans un premier temps, la structure d'un dispositif permettant la mise en oeuvre de l'invention va être décrite en relation avec la figure et, à la suite, le fonctionnement de ce dispositif sera détaillé compte tenu des différents éléments qui le composent.

Le dispositif reçoit donc par le lien montant un signal de réception UR sur l'entrée d'un premier commutateur 11 qui comporte deux sorties et qui est commandé par un signal de dérivation montante UD. Le signal de réception a le format d'une trame dite TRAU pour l'abréviation de l'expression anglaise "Transcoder Remote Adaptor Unit". Ces trames pour le plein débit et le demi-débit sont décrites dans les recommandations GSM respectives 08.60 et 08.61. Un second commutateur 12 commandé par le même signal de dérivation montante UD comporte deux entrées et une sortie. La première sortie du premier commutateur 11 est reliée directement à la première entrée du second commutateur 12 tandis que la seconde sortie du premier commutateur 11 est reliée à la seconde entrée du second commutateur 12 par l'intermédiaire d'un premier transcodeur 13. Ainsi, selon la nature du signal de dérivation montante UD, la sortie du second commutateur 12 correspond, soit au signal de réception UR reçu par le lien montant, soit au signal émis UE dans le lien montant par le premier transcodeur 13.

Le dispositif de transcodage comprend de plus un organe d'émission de signalisation 14 également associé au lien montant. Cet organe comprend essentiellement un générateur de tonalité 15, un additionneur 16 et un générateur de messages 17.

Le générateur de tonalité 15 est prévu pour produire un signal de tonalité montante UTS comportant une ou plusieurs tonalités en réponse à un premier signal de commande émission ECl. La ou les tonalités, qui sont produites au moyen d'un ou de plusieurs oscillateurs par exemple, correspondent chacune sensiblement à une fréquence pure. Avantageusement, cette ou ces fréquences sont choisies en dehors de la bande passante de signal de parole dans le lien montant. En effet, la bande téléphonique du RTCP est limitée à une fréquence basse de 300 Hz. Par ailleurs, les trois codeurs GSM possèdent une fonction de filtrage passe-haut dont la fréquence de coupure est supérieure ou égale à 80 Hz. On choisira donc de préférence des tonalités de fréquence inférieure à 80 Hz de sorte que ces tonalités soient inaudibles. On pourra également choisir des tonalités dont la fréquence va au delà de la bande passante car elles seront alors éliminées par le filtrage passe-bande du convertisseur numérique-analogique qui est utilisé pour restituer un signal de parole analogique à l'abonné concerné.

Le générateur de tonalité 15 est également prévu pour produire un signal de désactivation DS à destination d'un annuleur d'écho éventuel, signal que l'on retrouve également sous l'appellation de signal de neutralisation dans la littérature technique. Ce signal de désactivation DS est une autre tonalité, distincte des précédentes, qui est spécifiée dans les recommandations UIT-T G164 et G165. Il s'agit d'une sinusoïde centrée sur la fréquence 2100 Hz avec inversion de phase toutes les 450 millisecondes. Le signal de désactivation est produit pendant une durée suffisante pour que l'annuleur d'écho puisse le prendre en compte, soit environ 1 à 2 secondes. Il est généré par le dispositif de transcodage en charge de l'abonné appelant. Afin de ne pas créer de gêne pour l'abonné appelé, le dispositif de transcodage en charge de celui-ci sera avantageusement pourvu d'un moyen de filtrage de ce signal de désactivation à 2100 Hz. On rappellera par ailleurs que les conditions d'émission du signal de désactivation des annuleurs d'écho sont décrites dans la recommandation UIT-T V25.

L'additionneur 16 fait la somme du signal présent à la sortie du second commutateur 12, du signal de tonalité montante UTS et du signal de désactivation DS.

Le générateur de messages 17 introduit un message de signalisation dans le signal de sortie de l'additionneur 16 en réponse à un deuxième signal de commande émission EC2, ceci en procédant selon la technique connue dite du vol de bits. Il n'est pas nécessaire de détailler plus avant ce générateur puisqu'il fait partie de l'état de la technique.

Le message de signalisation indique le codage employé dans le signal de réception UR du lien montant et éventuellement le codage figurant dans le signal émis UE sur ce même lien montant. Avantageusement, ce message indique également si l'abonné à l'origine de ce signal de réception UR peut employer un ou des autres codages et, dans l'affirmative, lesquels.

Les éléments du dispositif de transcodage associés au lien montant étant énumérés, il convient maintenant de s'attacher à ceux qui sont associés au lien descendant.

Le dispositif reçoit par ce lien descendant un signal de réception DR sur l'entrée d'un troisième commutateur 21 qui comporte deux sorties et qui est commandé par un signal de dérivation descendante DD. Un quatrième commutateur 22 commandé par le même signal de dérivation descendante DD comporte deux entrées et une sortie. La première sortie du troisième commutateur 21 est reliée directement à la première entrée du quatrième commutateur 22 tandis que la seconde sortie du troisième commutateur 21 est reliée à la seconde entrée du quatrième commutateur 22 par l'intermédiaire d'un deuxième transcodeur 23. Ainsi, selon la nature du signal de dérivation descendante DD, la sortie du quatrième commutateur 22 correspond, soit au signal de réception DD reçu par le lien descendant, soit au signal émis DE dans le lien montant produit par le deuxième transcodeur 23.

L'entrée du troisième commutateur 21 est reliée d'une part à un détecteur de tonalité 24 et d'autre part à un détecteur de messages de signalisation 25.

Le détecteur de tonalité 24 est prévu pour identifier les différentes tonalités pouvant apparaître dans un signal de tonalité tel que celui décrit plus haut et présent dans le signal de réception DR du lien descendant. A titre d'exemple, ce détecteur de tonalité comprend une paire de filtres pour chacune des tonalités. Ces paires sont chacune constituée d'un filtre passe-bande et d'un filtre réjecteur de bande centrés sur la fréquence à détecter. La détection d'une tonalité réalisée au moyen de la combinaison de ces deux filtres a une durée de l'ordre de 500 millisecondes. Le détecteur identifie les tonalités qu'il a détecté dans un premier signal d'identification IS1.

Le détecteur de messages de signalisation 25 reçoit ici des messages de longueur L dans le signal de réception DR du lien descendant. Ce signal est codé au format MIC, si bien qu'il se présente sous la forme d'une succession d'échantillons de 8 bits au rythme de 8 kHz. Le message de signalisation a été obtenu par vol d'un bit, le premier par exemple, tous les N échantillons. Dans ce cas, le détecteur 25 comprend N registres à décalage et il comprend des moyens pour extraire le bit dont la position correspond à celle des bits volés dans chacun des échantillons. En choisissant d'une part une première variable entière i strictement positive et inférieure ou égale à N, d'autre part une deuxième variable entière k positive ou nulle et strictement inférieure â L, les registres à décalage de longueur L sont chargés de sorte que le (i + k N)ième bit extrait du signal de réception DR soit inscrit dans le ième registre à décalage. Dès que L.N bits ont été extraits, le contenu de chaque registre à décalage est comparé à chaque valeur possible du message de signalisation et cette opération est répétée à chaque fois que N nouveaux bits ont été extraits. En cas d'identité entre le contenu d'un des registres à décalage et de l'une des valeurs possibles du message de signalisation, le détecteur de messages 25 communique cette identité au moyen d'un deuxième signal d'identification IS2.

Le dispositif de transcodage comprend enfin un organe de contrôle 30, tel qu'un micro-contrôleur, qui produit des signaux de dérivation dans le lien montant UD et dans le lien descendant DD, qui produit le premier EC1 et le deuxième EC2 signal de commande émission et qui reçoit le premier IS1 et le deuxième IS2 signal d'identification. Le fonctionnement de cet organe apparaîtra dans la description qui suit du fonctionnement général du dispositif.

Lorsque l'abonné appelant demande une communication, un premier dispositif de transcodage est activé et il reçoit donc un signal de réception UR par le lien montant. L'organe de contrôle 30 de ce dispositif active les premier 13 et deuxième 23 transcodeurs. Il produit donc le signal de dérivation montante UD repectivement de dérivation descendante DD de sorte que la sortie du deuxième commutateur 12 respectivement du quatrième commutateur 22 soit raccordée à la sortie du premier transcodeur 13 respectivement du deuxième transcodeur 23. Il faut cependant un certain temps pour établir la communication de bout en bout et, tant que ce temps n'est pas écoulé, le dispositif reçoit par le lien descendant un signal de réception DR identique à celui qu'il a émis UE sur le lien montant. L'organe de contrôle 30 produit le deuxième signal de commande émission EC2 de sorte que le générateur de messages 17 produise un message aléatoire. Ce message aléatoire est choisi suffisamment long pour que la probabilité qu'un second dispositif de transcodage auquel ce message est destiné emploie le même message soit très faible. Pendant cette phase d'établissement de la communication, le détecteur de messages 25 du premier dispositif reçoit donc ce message aléatoire et l'indique à l'organe de contrôle 30 au moyen du deuxième signal d'identification IS2. Au contraire, lorsque ce message n'est plus reçu, cela signifie que la communication est établie.

Selon une première variante, l'organe de contrôle 30 du premier dispositif produit alors un premier signal de commande émission EC1 de sorte que le générateur de tonalité 15 produise un premier signal de tonalité montante UTS comprenant une seule tonalité. Lorsque le second dispositif de transcodage a détecté ce premier signal de tonalité, il produit un deuxième signal de tonalité qu'il émet à destination du premier dispositif. Naturellement, le deuxième dispositif active également ses deux transcodeurs dès que la communication est établie.

Si le détecteur de tonalité 24 du premier dispositif n'a pas reconnu ce deuxième signal de tonalité au bout d'un certain temps, l'organe de contrôle 30 du même dispositif en est informé par le premier signal d'identification IS1 et il ne modifie ni le signal de dérivation montante UD ni le signal de dérivation descendante DD.

Si, par contre, l'organe de contrôle 30 est informé que le deuxième signal de tonalité a été reçu, il commande alors le générateur de message 17 au moyen du deuxième signal de commande émission EC2 pour que celui-ci produise un message de signalisation indiquant la nature du codage appliqué sur le signal reçu UR par le lien montant et il produit un signal de désactivation DS à destination d'un annuleur d'écho éventuel. Le détecteur de messages 25 recherche alors un message d'acquittement émis par le deuxième dispositif et reçu par le signal de réception DR du lien descendant et en informe l'organe de contrôle 30 au moyen du deuxième signal d'identification IS2.

Si ce message d'acquittement indique que la nature du codage appliqué sur le signal reçu UR par le premier dispositif ne convient pas au deuxième dispositif, l'organe de contrôle 30 du premier dispositif ne modifie ni le signal de dérivation montante UD ni le signal de dérivation descendante DD, comme en cas de non-détection du deuxième signal de tonalité.

Si, par contre, ce message d'acquittement indique que la nature du codage convient, l'organe de contrôle 30 désactive les deux transcodeurs 13, 23. Il produit donc les signaux de dérivation montante UD et descendante DD de sorte que le signal reçu UR sur le lien montant soit appliqué à la sortie du deuxième commutateur 12 et que le signal reçu DR sur le lien descendant soit appliqué à la sortie du quatrième commutateur 22. Naturellement, le deuxième dispositif de transcodage désactive également ses deux transcodeurs.

Cette variante présente l'avantage de n'utiliser qu'une seule tonalité dans le signal de tonalité.

Selon une seconde variante, le signal de tonalité comporte des tonalités en nombre convenable pour que les messages de signalisation susceptibles d'être produit par le générateur de messages 17 puissent également être codés au moyen de ces tonalités.

On applique ainsi une redondance de signalisation par messages numériques et par tonalités à l'émission dans le lien montant par le premier dispositif. D'autre part, à la réception, le mode de fonctionnement est similaire à celui de la première variante si ce n'est que le détecteur de tonalité 24 et le détecteur de messages 25 travaillent en parallèle, le premier des deux détecteurs ayant identifié les messages ou les tonalités émis par le deuxième dispositif le signalant à l'organe de contrôle 30 au moyen du signal d'identification IS1, IS2 approprié. L'organe de contrôle 30 commande les quatre commutateurs 11, 12, 21, 22 comme dans la première variante.

Cette variante est un peu plus complexe à réaliser que la précédente mais elle permet d'obtenir une décision sur l'opportunité du double transcodage plus rapidement. En effet, la détection des tonalités est beaucoup plus longue que celle des messages numériques. Si les messages émis par un dispositif de transcodage sont reçus en toute intégrité par l'autre dispositif, alors la mise en oeuvre de l'invention sera réalisée dans un temps minimum.

On remarquera par ailleurs que dans le cas où la communication est établie entre deux abonnés du GSM, la suppression du double transcodage peut échouer si ces abonnés n'utilisent pas le même codage, par exemple si l'abonné appelant emploie le demi-débit alors que l'abonné appelé ne dispose pas de cette fonctionnalité.

L'invention propose également une solution pour améliorer cette situation au moyen des messages de signalisation, ceci dans la première variante comme dans la seconde.

Selon une première option, chaque dispositif de trancodage indique à l'autre dispositif toutes les possibilités de codage dont dispose l'abonné auquel il est associé, ceci au moyen de ces messages de signalisation. A titre d'exemple, il est prévu dans chaque dispositif un même tableau à deux entrées, une entrée pour le dispositif local et l'autre pour le dispositif distant, qui correspondent donc à ces possibilités. A chaque couple d'entrées est associé soit un codage unique commun aux deux abonnés, soit une incompatibilité de codage. S'il existe un codage commun, celui-ci est communiqué aux deux abonnés concernés afin qu'ils adoptent ce codage. S'il y a incompatibilité, les organes de contrôle des deux dispositifs mettent en service leurs deux transcodeurs respectifs.

Selon une seconde option, les deux dispositifs échangent des informations sur les possibilités de codage des abonnés auxquels ils sont associés toujours au moyen des messages de signalisation. Cet échange d'information est réalisé suivant un protocole qui ne sera pas plus détaillé car il sort du cadre de la présente invention et, de plus, ce protocole ne pose pas de difficultés à l'homme du métier.

Par ailleurs, l'invention n'est pas limitée aux modes de réalisation décrits ci-dessus. En particulier, l'homme du métier comprend bien que l'initiative de la procédure destinée à la suppression éventuelle du double transcodage peut aussi bien revenir au deuxième dispositif de transcodage associé à l'abonné appelé plutôt qu'au premier dispositif de transcodage associé à l'abonné appelant. De même, le signal de désactivation peut aussi bien être produit par le deuxième dispositif de transcodage associé à l'abonné appelé que par le premier dispositif de transcodage associé à l'abonné appelant.

Bien sûr, tout moyen qui a été présenté peut être remplacé par un moyen équivalent sans sortir du cadre de la présente invention.

## Revendications

1. Dispositif de transcodage prévu pour transcoder dans un lien montant un signal reçu (UR) en un signal émis (UE), comprenant un organe d'émission de signalisation (14) pour produire un message de signalisation et l'introduire dans ledit signal émis (UE) par vol de bits de ce signal, **caractérisé en ce que** ledit organe d'émission de signalisation (14) comprend de plus un générateur de tonalité (15) pour ajouter un signal de tonalité (UTS) au dit signal émis (UE) avant l'introduction dudit message de signalisation dans ce signal émis.

2. Dispositif selon la revendication 1 **caractérisé en ce que**, également prévu pour transcoder dans un lien descendant un signal reçu (DR) en un signal émis (DE), il comprend un détecteur (24) pour rechercher un signal de tonalité et un message de signalisation dans le signal reçu (DR) par ce lien descendant.

3. Dispositif selon la revendication 2 **caractérisé en ce qu'**il comprend des moyens (30, 11, 12, 21, 22) pour ne pas transcoder lesdits signaux reçus (UR, DR) par les liens montant et descendant lorsque le message de signalisation détecté dans le signal reçu (DR) par le lien descendant l'indique.

4. Dispositif selon l'une des revendications 2 ou 3 **caractérisé en ce qu'**il comprend des moyens pour produire un signal de désactivation (DS) à destination d'un organe de traitement placé dans les liens montant ou descendant et dégradant la transmission lorsque le signal de tonalité détecté dans le signal reçu (DR) par le lien descendant l'indique.

5. Dispositif selon la revendication 4 **caractérisé en ce que** ledit organe de traitement consiste en un annuleur d'écho.

6. Dispositif selon l'une quelconque des revendications précédentes **caractérisé en ce que** lesdits signaux émis et reçus correspondant à un signal de parole cantonné dans une bande passante prédéterminée, ledit signal de tonalité (UTS) est situé en dehors de cette bande passante.

7. Dispositif selon la revendication 6 **caractérisé en ce que** ledit signal de tonalité (UTS) est en-dessous de cette bande passante.

8. Dispositif selon la revendication 6 **caractérisé en ce que** ledit signal de tonalité (UTS) est au dessus de cette bande passante.

## Patentansprüche

1. Transkodiervorrichtung zum Transkodieren eines empfangenen Signals (UR) in ein Sendesignal (UE) in einer Aufwärts-Verbindung, mit einem Meldungssendemittel (14), das eine Meldenachricht erstellt und diese in besagtes Sendesignal (UE) einführt, indem letzterem Bits weggenommen werden, **dadurch gekennzeichnet, dass** besagtes Meldungssendemittel (14) außerdem einen Tongenerator (15) umfasst, um dem besagten Sendesignal (UE) vor der Überführung der besagten Meldenachricht in das Sendesignal ein Tonsignal (UTS) hinzuzufügen.

2. Vorrichtung nach Anspruch 1, **dadurch gekennzeichnet, dass** sie ferner zum Transkodieren eines empfangenen Signals (DR) in ein Sendesignal (DE) in einer Abwärts-Verbindung vorgesehen ist und einen Detektor (24) zum Suchen eines Tonsignals und einer Meldenachricht in dem über diese absteigende Verbindung empfangenen Signal (DR) umfasst.

3. Vorrichtung nach Anspruch 2, **dadurch gekennzeichnet, dass** sie Mittel (30, 11, 12, 21, 22) umfasst, um die besagten, über die aufsteigenden und absteigenden Verbindungen empfangenen Signale (UR, DR) nicht zu transkodieren, wenn die in dem über die absteigende Verbindung empfangenen Signal (DR) erfasste Signalnachricht dieses vorgibt.

4. Vorrichtung nach einem der Ansprüche 2 oder 3, **dadurch gekennzeichnet, dass** sie Mittel zum Erzeugen eines Deaktivierungssignals (DS) umfasst, das an ein in den aufsteigenden oder absteigenden Verbindungen angeordnetes und die Übertragung verschlechterndes Behandlungsmittel adressiert ist, wenn das in dem durch die absteigende Verbindung empfangenen Signal (DR) erfasste Tonsignal dies vorgibt.

5. Vorrichtung nach Anspruch 4, **dadurch gekennzeichnet, dass** das Behandlungsmittel ein Echounterdrücker ist.

6. Vorrichtung nach einem der vorstehenden Ansprüche, **dadurch gekennzeichnet, dass** das Tonsignal (UTS), wenn die besagten Sende- und empfangenen Signale einem auf ein vorbestimmtes Passband beschränkten Sprachsignal entsprechen, außerhalb dieses Passbandes angeordnet ist.

7. Vorrichtung nach Anspruch 6, **dadurch gekennzeichnet, dass** das Tonsignal (UTS) unterhalb dieses Passbandes angeordnet ist.

8. Vorrichtung nach Anspruch 6, **dadurch gekennzeichnet, dass** das Tonsignal (UTS) oberhalb dieses Passbandes angeordnet ist.

## Claims

1. Transcoding apparatus designed to transcode a receive signal (UR) into a transmit signal (UE) in an up link, comprising a signaling transmitter member (14) for producing a signaling message and for introducing it into the transmit signal (UE) by stealing bits therefrom, **characterized in that** said signaling transmitter member (14) also comprises a tone generator (15) for adding a tone signal (UTS) to said transmit signal (UE) prior to introducing said signaling message into this transmit signal.

2. Apparatus according to claim 1, **characterized in that**, further being designed to transcode a receive signal (DR) into a transmit signal (DE) in a down link, it comprises a detector (24) to look for a tone signal and a signaling message in the signal (DR) received over said down link.

3. Apparatus according to claim 2, **characterized in that** it comprises means (30,11,12,21,22) for not transcoding said signals (UR, DR) received over said up and down links when the signaling message detected in the signal (DR) received via the down link so requires.

4. Apparatus according to one of claims 2 or 3, **characterized in that** it comprises means to produce a deactivation signal (DS) for the application to a processor member placed in the up and down links and degrading transmission when the tone signal detected in the signal (DR) received over the down link so requires.

5. Apparatus according to claim 4, **characterized in that** said processor member consists in an echo canceller.

6. Apparatus according to any one of the foregoing claims, **characterized in that** said transmit and receive signals corresponding to a speech signal restricted to a predetermined passband, said tone signal (UTS) lies outside said passband.

7. Apparatus according to claim 6, **characterized in that** said tone signal (UTS) lies below the passband.

8. Apparatus according to claim 6, **characterized in that** said tone signal (UTS) lies above said passband.
